Europäisches Patentamt

European Patent Office

Office européen des brevets

(11) Publication number: **0 313 168**
**A1**

## EUROPEAN PATENT APPLICATION

(21) Application number: 88202339.3

(51) Int. Cl.⁴: **B65B 25/16** , **B65B 31/00** , **B21D 15/00**

(22) Date of filing: **19.10.88**

(30) Priority: **20.10.87 NL 8702505**

(43) Date of publication of application:
**26.04.89 Bulletin 89/17**

(84) Designated Contracting States:
**BE DE FR GB IT NL**

(71) Applicant: **TEVOPHARM SCHIEDAM B.V.**
**P.O. Box 35 Conradstraat 4**
**NL-3100 AA Schiedam(NL)**

(72) Inventor: **van Kogelenberg, Jacob**
**Naaldwijkseweg 80**
**NL-2691 RK 's-Gravenzande(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Method for packing bakery products such as bread.**

(57) Method for packing bakery products such as
bread in a gas tight wrapper of foil material or the
like, whereby the baked product first is cooled down
before it is arranged the wrapper, said cooling down
takes place in an environment of $CO_2$ gas with the
purpose to saturate the product with this gas.

EP 0 313 168 A1

## Method for packing bakery products such as bread.

The invention relates to a method for packing bakery products such as bread in a gas tight wrapper of foil material or the like, whereby the baked product first is cooled down before it is arranged within the wrapper.

Such a method is generally known.

With bakery products not only bread is meant, but also cake, biscuit, pastry and the like.

The bakery product coming from the furnace has in general a temperature which is somewhat higher than 100° C. The cells of the product are then essentially filled up with water vapour and $CO_2$. The $CO_2$ has been developped during rising of the product.

Thus, at the moment that the hot product is leaving the furnace the product is practically free of oxygen, what would be an ideal situation for packing.

During cooling down in atmosphere air, however, several effects occur, namely:

The $CO_2$ gas and the water vapour disappear partly from the product as a result oa the partial vapour pressure, as long as there is reached balance with the environment.

The cooling down of the product results in shrimping of the present gas mixture in the cell structure, so that vacuum is developped in the product, which is filled up by atmosphere air in which of course about 21% oxygen is present.

Moreover, during cooling down in atmosphere, the product can be contaminated with traces of bacteria or fungus.

From for instance Dutch Patent Specification 176,131 it is known to cool down not in atmospheric air, but in vacuum.

Above-mentioned effects will occur then partly.

The invention aims to avoid these unfavourable effects or to decrease them at least and this is according to the invention obtained, in that said cooling down takes place in an environment of $CO_2$ gas with the purpose to saturate the product with this gas.

Thus, the $CO_2$ gas is not used as coolant, but must be absorbed in the product during cooling down of the product.

During cooling down of the product in the $CO_2$ environment the $CO_2$ remains present in the product and before packing the product is practically free of oxygen.

Since the packing itself as usual takes place in an environment of gas in this case an environment of $CO_2$, the situation will be maintained also in the wrapper.

After packing the $CO_2$ contents and the oxygen contents in the product will not be changed practically.

Thus, according to the invention it is sufficient to let prevail the $CO_2$ gas environment which is usual at packing also in the room where the product is cooled down, so that said disadvantages are partly or completely avoided.

By saturation of the product with $CO_2$ gas an excess of $CO_2$ gas in the wrapper is no longer necessary and the wrapper can be closed tightly around the product.

By the saturation with $CO_2$ gas after closing of the wrapper no absorbation of the $CO_2$ gas takes place, so that undesired vacuum effects are prevented.

The oxygen in bakery products and the atmosphere around the product in the package must be replaced by inert gas in order to give the product a long shelf storage life.

The air in the product can only be removed by vacumizing the room in which the product is present. After removing the air with oxygen the inert gas can be supplied to the room. The product takes up now the gas. This method is among others carried out with vacuum packing machines. The esential purpose of the invention is to carry out the replacement of oxygen in the product in a much simpler and cheaper method.

The bakery product absorbes during the cooling down atmospheric air with the oxygen present therein. In order to give the bakery products a long shelf storage life, it is necessary to remove the oxygen from the product. This can only be done with vacumizing the product. After vacumizing, whereby the air with the oxygen is sucked from the product and from the environment around the product in the wrapper, an inert gas is supplied in the wrapper mostly $CO_2$ or a mixture of $CO_2$ and $N_2$, whereby the vacuum prevailing in the cells of the product equalizes with the gas mixture. At the same time the environment around the product is filled up with the gas mixture. Owing to this method it is possible to obtain a very low rest contents of oxygen; a condition for long shelf storage life.

The invention makes its possible to replace this expensive method for obtaining the required low rest oxygen percentages in the wrapper and in the product by a cheaper and simpler method.

By cooling down bakery products such as bread, cake and other bakery products in an environment of 100% $CO_2$, saturation of the product with $CO_2$ is reached. At the same time the $CO_2$ is solved in the moisture and the fats in the product. In this way it is prevented that the $CO_2$ disappears quickly from the product after this has left the cooling chamber.

Since the product itself is already saturated with $CO_2$ it is possible to pack the product at the cheap flowpack-manner. Hereby only the free atmosphere in the package must be replaced by $CO_2$.

In this way a low rest oxygen percentage can be reached, at the same time, however, a $CO_2$ percentage of more than 80% is reached, which is the limit value to prevent each form of grow of bacteria and fungus.

Essential hereby is that it is cooled down in an atmosphere of 100% $CO_2$ to a temperature of maximum 40° C;

- it can be packed in a flowpack-machine (of course, an air tight package must be reached);

- there is no pseudo vacuum; for this reason the wrapper can be relatively tight because there is no underpressure;

- in this way no unnecessary package material is used.

## Claims

Method for packing bakery products such as bread in a gas tight wrapper of foil material or the like, whereby the baked product first is cooled down before it is arranged within the wrapper, **characterized** in that said cooling down takes place in an environment of $CO_2$ gas with the purpose to saturate the product with this gas.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 700 506 (T. LARSEN) * Page 2, line 24 - page 3, line 11; page 5, lines 4-5 * | 1 | B 65 B 25/16 B 65 B 31/00 A 21 D 15/00 |
| A | DE-A-2 657 827 (A. OETKER) * Page 6, line 19 - page 8, line 4 * | 1 | |
| A | NL-A-8 105 828 (ALBRO BAKKERIJEN) * Page 14, lines 1-11 * | 1 | |
| A | NL-A-6 712 493 (A. BENNER) * Page 2, lines 25-31 * | 1 | |

TECHNICAL FIELDS SEARCHED (Int. Cl.4)

B 65 B
A 21 D

The present search report has been drawn up for all claims

| Place of search | Date of completion of the search | Examiner |
|---|---|---|
| THE HAGUE | 20-12-1988 | JAGUSIAK A.H.G. |